# EUROPÄISCHE PATENTANMELDUNG

(11) **EP 4 755 850 A1**
(43) Veröffentlichungstag der Anmeldung: **10.06.2026**
(21) Anmeldenummer: 25219848.6
(22) Anmeldetag: 01.12.2025
(51) Int. Cl.: C01B 32/21, B02C 13/18, B02C 23/10, B02C 23/26, B02C 23/40

(54) **VERFAHREN ZUR EFFIZIENTEREN SPHÄROIDISIERUNG VON GRAPHITPARTIKELN HOHER QUALITÄT**

(30) Priorität: 05.12.2024 DE 102024136388
(71) Anmelder: NETZSCH Trockenmahltechnik GmbH, 95100 Selb (DE)
(72) Erfinder: Schöbel, Patrick, 60596 Frankfurt (DE); Winter, Frank, 63165 Mühlheim (DE); Höfels, Christian, 63457 Hanau (DE)
(74) Vertreter: Misselhorn, Hein-Martin

(57) **Zusammenfassung**

Vorrichtung zum Verrunden eines Graphitmaterials durch Prallwirkung umfassend einen Prozessraum, eine Aufgabeeinrichtung zur Zuführung von Graphitmaterial in den Prozessraum und eine Mehrzahl an Verrundungswerkzeugen, die - bevorzugt - am äußeren Umfang eines um eine Drehachse und in einer Drehrichtung rotierenden Rotors bevorzugt in Gestalt einer Scheibe angeordnet sind, der sich im Prozessraum befindet, wobei die Verrundungswerkzeuge derart gestaltet sind, dass sie im Betrieb so auf Graphitpartikel einwirken können, dass diese durch Faltung verrundet werden, und eine Trenneinrichtung zum Abtrennen von Feinmaterial und Feinstmaterial sowie einen Produktauslass, wobei der Prozessraum mit einer Kühlmittelaufgabevorrichtung ausgerüstet ist, über die freies Kühlmedium in den Prozessraum eingebracht werden kann, wobei die Vorrichtung bevorzugt auch eine Regelung für die Prozessraumtemperatur umfasst.

## Beschreibung

Die Erfindung betrifft ein Verfahren zum effizienteren Verrunden bzw. Sphäroidisieren von Graphitpartikeln hoher Qualität

### TECHNISCHER HINTERGRUND

Lithiumionen-Batterien sind aktuell der Stand der Dinge, wo Akkumulatoren gebraucht werden, um elektrische Geräte anzutreiben - vom Laptop über Handwerkzeuge bis hin zu Automobilen.

Es ist Stand der Technik, Lithiumionen-Batterien mit einer Anode aus Graphit auszustatten. Der Graphitanode kommt zum einen die Aufgabe zu, Strom zu leiten und nach außen abzugeben, wozu Graphit von Haus aus bestens geeignet ist. Darüber hinaus fließen ihr bei jeder Stromentnahme aus der Akkuzelle über deren Elektrolyten Li-Ionen zu, die sie in ihrer Gitterstruktur zu speichern hat.

Neben der chemischen Reinheit spielt die Morphologie des Graphits eine entscheidende Rolle.

Für die Anwendung als Anodenmaterial ist sphärischer Graphit (SG) ideal. Dessen glatte, deutlich weniger anisotrope und daher allseits aufnahmebereite Oberfläche ist gut dazu in der Lage, effektiv mit den im Anodenmaterial zu speichernden Li-Ionen zu interagieren und dadurch eine hohe Anodenbeladbarkeit zu bieten. Darüber hinaus neigt sphärischer Graphit weniger zum Abblättern und dem damit einhergehenden irreversiblen Kapazitätsverlust, so dass sich eine höhere Lebensdauer erreichen lässt. Insgesamt lässt sich bei der Verwendung sphärischen Graphits damit eine höhere Energiedichte gepaart mit einer längeren Lebensdauer erreichen.

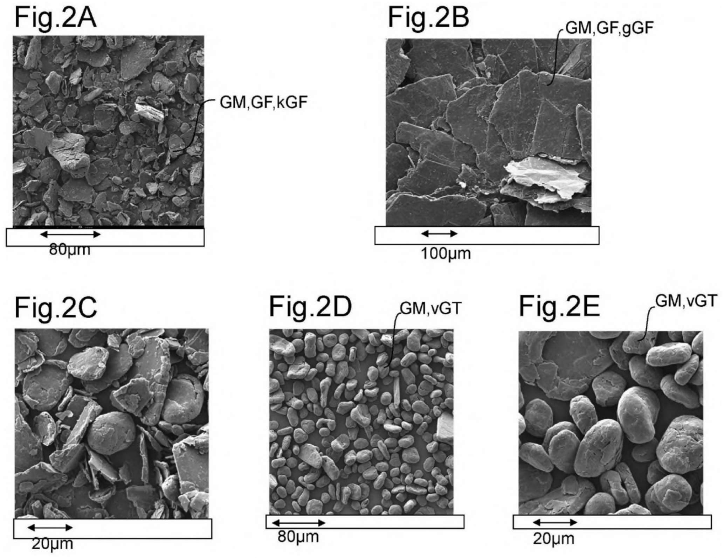

In der Natur tritt Graphit unter anderem als im Gestein verteilter sog. Flockengraphit auf, wie ihn die Fig. 2a zeigt.

Unbehandelter Flockengraphit mit seiner geschichteten Morphologie zeigt ausgeprägte Basalebenen. Das sind die Ebenen, die parallel zur Kristallstruktur des Graphits verlaufen. Entlang dieser Ebenen stellt Graphit einen sehr guten thermischen sowie auch elektrischen Leiter dar, während Graphit quer zu den Basalebenen- also zwischen den einzelnen Ebenen - als thermischer sowie auch elektrischer Isolator angesehen werden kann. Flockengraphit zeigt also eine ausgeprägte Anisotropie.

Aus diesem Grunde muss Flockengraphit aufgearbeitet werden, um hieraus den benötigten sphärischen Graphit entstehen zu lassen. Denn letzterem ist diese Basalproblematik weitgehend fremd. Er eignet sich daher wesentlich besser für elektrische Anwendungen. Die Fig. 2b vermittelt einen Eindruck davon, wie sphäroidisiertes Graphitmaterial der Feinheitsklasse SG 20 aussieht.

Andere in der Praxis oft nachgefragte Feinheitsklassen sind die Feinheitsklassen SG 22, 18 und 10. Wie der Fachmann weiß, spricht man z. B. dann von der Feinheitsklasse SG 22, wenn der d₅₀ des Materials 22 µm beträgt, also 50 % der das Graphitmaterial ausmachenden Partikel einen kleineren oder gleichen auf das Partikelvolumen bezogenen Äquivalenzdurchmesser als 22 µm aufweisen. Sinngemäß Gleiches gilt für die anderen Feinheitsklassen.

Die entsprechende Aufarbeitung ist im Stand der Technik bekannt, wenngleich es sich um eine noch recht junge Technologie handelt. Sie wird Sphäroidisierung genannt.

Die Sphäroidisierung wird nicht etwa durch Mahlen oder Rundschleifen einzelner Partikel des Flockengraphits erreicht, sondern durch mehrfache sog. Faltung der Graphitflocken. Die Faltung wird erreicht, indem man von einem Trägergasstrom bzw. Prozessgasstrom getragene Graphitflocken wiederholt mit Hindernissen kollidieren lässt, mit einer kinetischen Energie, die so gewählt ist, dass die Graphitpartikel nicht zertrümmert werden, sondern nur gefaltet, also deformiert.

Im Regelfall wird so vorgegangen, dass das Rohgraphit zunächst in einer Sichtermühle einem echten Mahlvorgang unterzogen wird, um es so vorzuzerkleinern und Graphitflocken zu erzeugen, die klein genug sind, um daraus in einem nachfolgenden Sphäroidisierungsschritt sphärisches Graphit der gewünschten Qualität bzw. Feinheitsklasse erzeugen zu können. Das so vorgemahlene Graphitmaterial wird zu diesem Zweck portionsweise in einen sog. Sphärosichter eingebracht.

Dieser ist mit Einbauten versehen, die die Graphitpartikel einer multiplen Faltung unterziehen und dadurch sphäroidisieren, anstatt sie unnötig weiter zu zertrümmern. Ein solcher Sphärosichter erzeugt im Betrieb intern eine starke turbulente Strömung. Er kommt zwar nicht ohne Durchleitung eines extern erzeugten Prozessgasstroms aus, der Prozessgasstrom ist bei ihm aber geringer als bei einer vergleichbaren Mühle. Nach einer bestimmten Behandlungszeit ist die gewünschte Produktqualität erreicht. Der Sphärosichter wird nun entladen. Die so erhaltene Graphitmischung wird einem integrierten oder externen Sichter zugeführt, der die fertigen, sphärischen Graphitpartikel vom damit einhergehenden, zu verwerfenden Feingut trennt.

Ein Sphärosichter verrundet am effektivsten, wenn geringe Luftmengen durch die Anlage strömen. Da zur Sphäroidisierung erhebliche mechanische Energie in den Prozessraum des Sphärosichters eingebracht wird, steigt die Temperatur im Sphärosichter bei der Verrundung eines Batches stark an. Denn die nur geringen Luftmengen, die während der Sphäroidisierung durch den Sphärosichter laufen, und der mengenmäßig nicht allzu bedeutende Abzug von für die bestimmungsgemäße Verrundung zu feinem Graphitmaterial vermögen keinen wirksamen Kühlungseffekt zu leisten. Temperaturen über 100 °C sind daher die Regel. Das stellt zum einen für die Anlagentechnik ein Problem dar. Es sind schnell drehende Bauteile verbaut, welche möglichst dicht mit den stehenden Gehäuseteilen abschließen sollen. Schon das führt bei den starken Temperaturschwankungen, die durch das variable Belastungsprofil der Sphäroidisierung entstehen, zu Problemen.

Um diesem Problem abzuhelfen, ist im Stand der Technik vorgesehen, hochbelastete Anlagenbauteile mittels eines geschlossenen Kühlwasserkreislaufs zu kühlen.

Auch wenn man die Lager des Sphärosichters und andere temperatursensible Bauteile auf die genannte Art und Weise kühlt, bleibt ein Problem. Die verschiedenen Temperaturen über jeden Batch führen zu ständig wechselnden Spaltmaßen. Diese sind für die gleichbleibende Produktqualität ein Problem, weil die Luftmengen über jede Batchverarbeitung hinweg schwanken. Im Stand der Technik versucht man, dieses Problem zu lösen, indem auch der Mantel des Mahlraums und/oder die Mahlwerkzeuge an den geschlossenen Kühlwasserkreislauf angeschlossen werden.

Diese Art der Kühlung ist aber bisher nicht durchweg befriedigend. Zum Teil reichen die Mantelflächen des Prozessraums des jeweiligen Sphärosichters flächenmäßig nicht aus, um eine wirklich effektive Kühlung zu gewährleisten. Das ist insbesondere bei steigender Baugröße der Sphärosichter ein Problem, da die Mantelfläche dabei im Verhältnis weniger stark ansteigt als die infolge der steigenden Baugröße in den Prozessraum eingebrachte Energie. In manchen Fällen ist die bekannte Mantelkühlung auch zu träge, um eine optimale Prozessführung zu ermöglichen, die sich in einer entsprechenden Produktqualität äußert.

### DER ERFINDUNG ZUGRUNDE LIEGENDES PROBLEM

Der Erfindung liegt das Problem zugrunde, eine Vorrichtung und ein Verfahren zur Sphäroidisierung anzugeben, bei denen sich die Temperatur in der Anlage besser beherrschen lässt.

### DIE ERFINDUNGSGEMÄSSE LÖSUNG

Erfindungsgemäß wird dieses Problem durch eine Vorrichtung nach Anspruch 1 gelöst.

Die erfindungsgemäße Vorrichtung wird auch als Sphärosichter bezeichnet. Es handelt sich ihrer Bauart nach um eine Vorrichtung zum Verrunden eines Graphitmaterials durch Prallwirkung.

Die erfindungsgemäße Vorrichtung umfasst einen Prozessraum und eine Aufgabeeinrichtung bzw. einen Zugang zur Zuführung von Graphitmaterial in den Prozessraum.

Die erfindungsgemäße Vorrichtung umfasst ferner eine Mehrzahl von Verrundungswerkzeugen. Diese sind - bevorzugt - am äußeren Umfang eines um eine Drehachse und in einer Drehrichtung rotierenden Rotors bevorzugt angeordnet, der sich im Prozessraum befindet.

Der Rotor ist bevorzugt in Gestalt einer Scheibe ausgeführt.

Dabei sind die Verrundungswerkzeuge derart gestaltet, dass sie im Betrieb so auf die im Prozessraum befindlichen Graphitpartikel einwirken können, dass diese - zumindest mehrheitlich - durch Faltung verrundet werden. Die erfindungsgemäße Vorrichtung zeichnet sich in ihrer Gestaltung also gerade dadurch aus, dass sie nicht primär zertrümmernd und/oder schleifend auf die zu behandelnden Graphitpartikel einwirkt und dadurch die benötigte Verrundung herbeiführt, sondern überwiegend umformend.

Zusätzlich und im Regelfall körperlich vollständig getrennt von dem eben schon erwähnten Rotor besitzt die erfindungsgemäße Vorrichtung eine Trenneinrichtung zum Abtrennen von Feinmaterial und Feinstmaterial aus dem Prozessraum.

Schließlich besitzt die erfindungsgemäße Vorrichtung einen Produktauslass.

Die erfindungsgemäße Vorrichtung zeichnet sich dadurch aus, dass der Prozessraum mit einer Kühlmittelaufgabevorrichtung ausgerüstet ist, über die freies Kühlmedium in den Prozessraum eingebracht werden kann, wobei die Vorrichtung bevorzugt auch eine Regelung für die Prozessraumtemperatur umfasst.

Aus patentrechtlichen Gründen festzuhalten ist hierzu zunächst, dass reine Luft, reines Graphit oder eine Mischung aus Luft und Graphit kein Kühlmittel im Sinne der Erfindung sind. Vielmehr kommt in den meisten Fällen als Kühlmittel ein aus einem Trägergas und einer Flüssigkeit hergestelltes Kühlmittel zum Einsatz.

Das Kühlmittel kommt als freies Kühlmittel zu Einsatz, d. h., es durchströmt den Prozessraum nicht in einer geschlossenen Leitung, innerhalb derer das Kühlmittel im Wege des Wärmetauschs Wärme aufnimmt, sondern es wird so in den Prozessraum abgegeben, dass es sich dort mit dem zu verrundenden Graphit mischt.

Vorzugsweise ist die erfindungsgemäße Vorrichtung darüber hinaus mit mindestens einem Leitapparat ausgestattet und sie besitzt meist einen Abdeckring, der typischerweise oberhalb der Verrundungswerkzeuge angebracht ist.

Dadurch, dass das Kühlmittel als freies Kühlmittel in den Prozessraum eingebracht wird, kann es sich im Prozessraum mit dem zu verrundenden Graphitmaterial vermischen und daher besonders intensiv und schnell zumindest einen Teil der durch die Verrundungswerkzeuge in das zu verrundende Graphitmaterial eingebrachten Energie aufnehmen, umsetzen (z. B. durch Kühlmittelverdampfung) und/oder abtransportieren, z. B. durch Abzug des Kühlmittels über die Trenneinrichtung und der von ihm aufgenommenen Energie. Auf diese Art und Weise kann der Prozessraum nicht nur - im Wesentlichen unabhängig von der Ausgestaltung des Prozessraums und der Anlagengröße - effektiver gekühlt werden als bisher. Wegen der im Vergleich zu einer bloßen Mantelkühlung des Prozessraums wesentlich geringeren Reaktionsträgheit des Kühlsystems kann auch wesentlich besser als bisher eine Regelung (im Sinne einer "close loop control") der Kühlraumtemperatur realisiert werden.

Da durch die erfindungsgemäße Kühlung die Temperaturspreizung verringert werden kann, die im Lauf einer Batchbearbeitung auftritt, kann die Batchverarbeitung nicht nur schneller erfolgen (da beim Einbringen von Energie über die Verrundungswerkzeuge weniger Rücksicht auf die Höhe des Energieeintrags genommen werden muss), sondern es steigt auch die Verrundungsqualität. In vielen Fällen kann auch die Batchgröße erhöht werden, da der höhere Energieeintrag, der für die Verarbeitung eines größeren Batches in gleicher Zeit erforderlich ist, die Temperatur nicht mehr in unzulässige Höhen treibt.

### WEITERE OPTIONALE AUSGESTALTUNGSMÖGLICHKEITEN FÜR DIE ERFINDUNG

Besonders bevorzugt ist es, wenn die Kühlmittelaufgabevorrichtung mindestens einen Kühlmittelzerstäuber umfasst. Ein solcher Zerstäuber zerstäubt das Kühlmittel, bevor und/oder während es in den Prozessraum gelangt. Als ideal hat sich die Verwendung eines Kühlflüssigkeits- und insbesondere Wassernebels erwiesen, meist aus destilliertem bzw. demineralisiertem Wasser, um keine Rückstände und insbesondere Kalkkristalle im Graphit zu hinterlassen. Tunlichst wird eine Benetzung oder Anfeuchtung der Graphitpartikel vermieden, die so stark ist, dass die Gefahr eines Verklumpens der Graphitpartikel entsteht. Vielmehr ist es im Regelfall so, dass es vermieden wird, die Restfeuchte der Graphitpartikel über den Batchprozess hinweg zu verändern, zumindest mehr als nur unwesentlich.

Als besonders günstige Option hat es sich herausgestellt, die Kühlmittelaufgabevorrichtung so zu gestalten, dass sie mindestens eine, bevorzugt mehrere Zweistoffdüsen umfasst. Eine solche Zweistoffdüse kann z. B. mit Kühlflüssigkeit, insbesondere Wasser, und zugleich mit Luft gespeist werden. Sie erzeugt dann einen - im Regelfall von Anfang an über dem Taupunkt liegenden - Wassernebel, dessen Tröpfchen vollständig verdampfen, wenn sie sich im Prozessraum mit dem erhitzten Graphitpartikel zu einem Graphit-Luft-Aerosol mischen. Sie entziehen dabei über ihre Verdampfungsenthalpie dem Inhalt des Prozessraumes Energie, nämlich deutlich mehr Energie (neun bis zehnmal mehr) als bei einer einfachen Weitererwärmung einer Flüssigkeit ohne Phasenänderung, welche z.B. bei einer Mantelkühlung vorliegen würde.

Idealerweise ist der Prozessraum durch einen Deckel und bevorzugt durch einen oberseitigen Deckel verschlossen und die Kühlmittelaufgabevorrichtung durchdringt den Deckel, so dass letztendlich ein Port gebildet wird, über den das Kühlmittel durch den Deckel hindurch dem Prozessraum aufgegeben werden kann. Im Versuch hat sich herausgestellt, dass eine Kühlmittelaufgabe von oben, also durch den Deckel hindurch, am effektivsten ist, weil so die im Prozessraum anzutreffenden Strömungsverhältnisse am besten genutzt werden.

Dabei ist es ganz ideal, wenn die Kühlmittelaufgabevorrichtung über die sie tragende Umgebung hinaus frei in den Prozessraum hineinragt, bevorzugt aber um weniger als 5 mm. Damit wird gerade auch bei der Verwendung von Kühlnebel die Gefahr gebannt, dass der frisch aufgegebene Kühlnebel die Gehäuse-, Deckel- oder Einbauinnenoberfläche benetzt und dort als Film oder in Tropfenform hängen bleibt, anstatt direkt zu verdampfen.

In vielen Fällen ist es besonders günstig, dass das Kühlmittel mit einem Überdruck von mindestens einem Bar in den Prozessraum eingebracht wird. Es schießt dann in den Prozessraum ein und vermischt sich besonders schnell und intensiv mit dem sich turbulent bewegenden Graphit-Luft Aerosol des Mahlraums. Der Wasser- und Gasdruck in der Zweistoffdüse beeinflusst die Tropfengröße im Sprühnebel. Sehr bevorzugt sind besonders kleine Tropfen, um Kontakt zu möglichst viel Oberfläche zu bieten. Die Beanspruchung bei der Sphäroidisierung führt zu einer starken Aufheizung der Einzelpartikel mit kurzfristigen Temperaturspitzen, welche deutlich über der Gastemperatur im inneren des Sphärosichters liegen. Entsprechend ist eine schnelle Verdampfung bei ausreichend kleiner Tropfengröße und guter Zerstäubung gesichert.

In vielen Fällen ist es günstig, wenn das Kühlmittel den Prozessraum zumindest auch, bevorzugt überwiegend oder sogar im Wesentlichen, über die Trennvorrichtung verlässt. Besonders günstig ist es, wenn die Vorrichtung mindestens einen Aufnehmer für die Prozessraumtemperatur besitzt und dieser Aufnehmer bevorzugt mindestes einen halben Prozessraumnenndurchmesser auf der Kreisbahn von der mindestens einen Kühlmittelaufgabevorrichtung entfernt angeordnet ist. Auf diese Art und Weise wird verhindert, dass der Aufnehmer auf kurzem Wege von einem gerade eben erst in den Prozessraum eingebrachten Kühlmittelschwall oder Kühlmittelstrahl getroffen wird, was ihn fälschlicherweise eine geringere Temperatur messen lassen würde als die Temperatur, die im Prozessraum relevant ist.

Besonders bevorzugt ist es, den Temperaturaufnehmer im Deckel und idealerweise auf zumindest im Wesentlichen dem gleichen Radius wie die Kühlmittelaufgabevorrichtung zu positionieren - dann bevorzugt um 90° bis 270° winkelverschoben zur Kühlmittelaufgabevorrichtung.

Weitere Anwendungsarten, Ausgestaltungsmöglichkeiten, Wirkungsweisen und Vorteile der Erfindung ergeben sich aus dem Ausführungsbeispiel und den unten unter "Sonstiges" zu findenden Ausführungen.

### FIGURENLISTE

Fig. 1 zeigt den Sphärosichter in einer Schnittansicht (Mittellängsschnitt.
Fig. 1A zeigt eine Ausschnittvergrößerung der Fig. 1
Fig. 1B zeigt den Sphärosichter gem. Fig. 1 in einer Aufsicht von oben, zu erkennen sind hier nun auch die beiden erfindungsgemäßen Ports 5a, 5b für die Kühlmittelbeaufschlagung und die Temperaturerfassung im Sphärosichter.
Fig. 1C zeigt einen Blick in den Sphärosichter gem. Fig. 1B von unten her gesehen (Unterseite senkrecht zur Hauptdrehachse weggeschnitten).
Fig. 2a zeigt unbehandelten Flockengraphit.
Fig. 2b zeigt sphäroidisiertes Graphitmaterial der Feinheitsklasse SP 22.
Fig. 2c bis 2e zeigen weitere Produktergebnisse.

### AUSFÜHRUNGSBEISPIEL

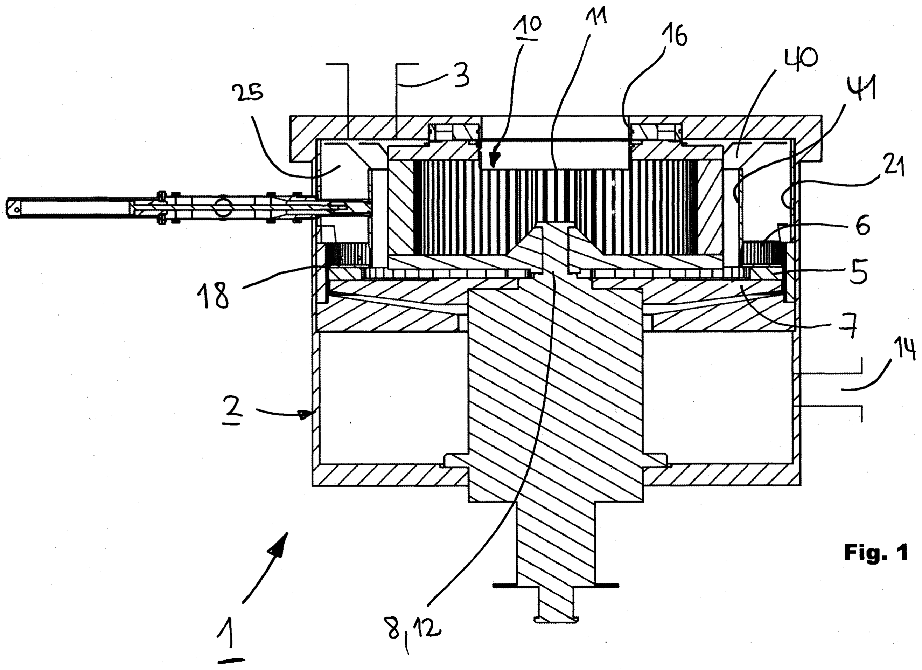

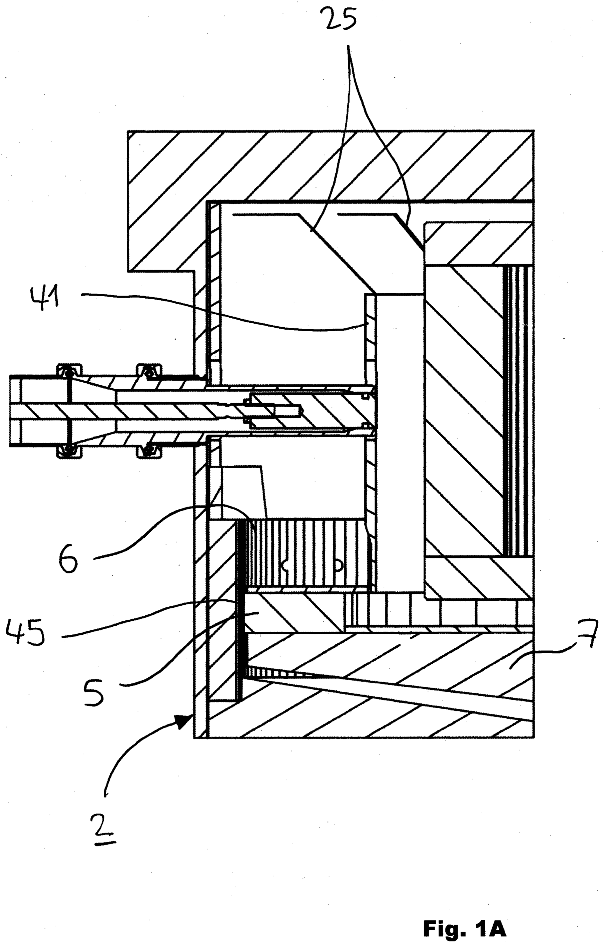

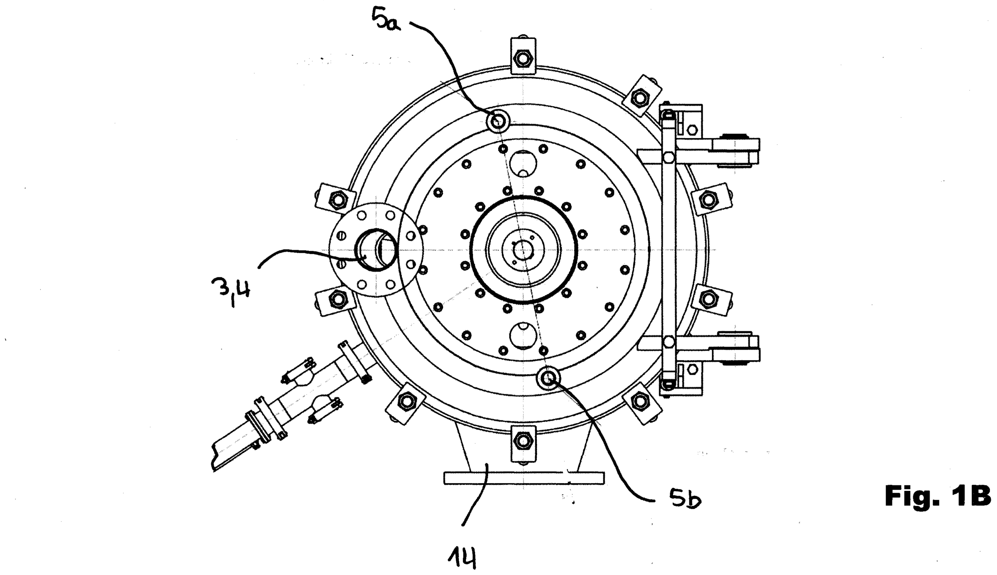

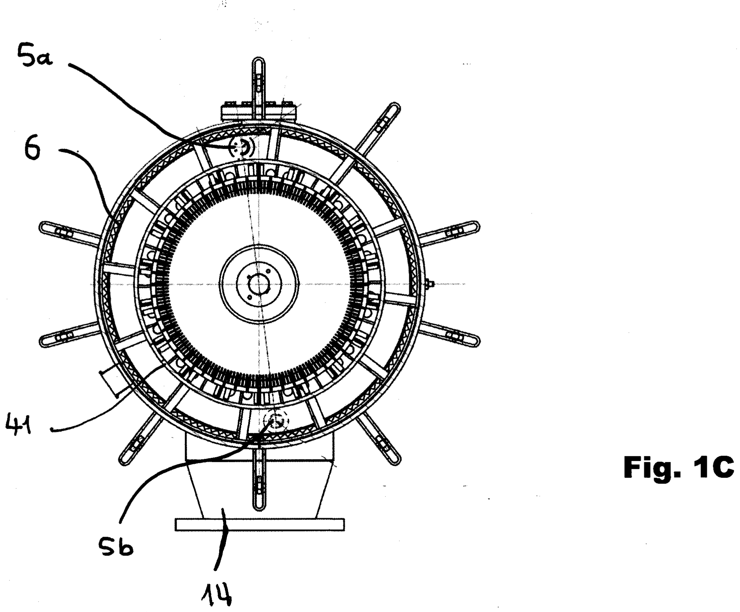

Fig. 1 zeigt eine erfindungsgemäße Vorrichtung 1, die auch als Sphärosichter bezeichnet wird und zum Verrunden von Graphitflocken GF eines Graphitmaterials GM dient oder schon zum Verrunden von dessen Vorstufe wie z. B. Grünkoks, was nachfolgend nicht jeweils extra betont wird - allerdings ohne dass in dieser schematischen Ansicht schon der Kühlmitteleinlass oder der im Zusammenhang damit stehende Temperaturaufnehmer für die Temperatur im Prozessraum zu erkennen wäre.

Ausweislich der Fig. 1 umfasst die Vorrichtung 1 bevorzugt ein annähernd als stehender Zylinder ausgebildetes Gehäuse 2, an dessen Oberseite eine Aufgabeeinrichtung 3 zur Zuführung des Graphitmaterials GM angeordnet ist, insbesondere eine Aufgabeeinrichtung 3 zur Zuführung von Graphitflocken GF.

Insbesondere ist im gezeigten Ausführungsbeispiel die Aufgabeeinrichtung 3 als Fallrohr ausgebildet, es kann aber auch vorgesehen sein, dass das Graphitmaterial GM über eine Injektor-Aufgabe zugeführt wird.

Das Graphitmaterial GM trifft auf Verrundungswerkzeuge 5 auf, die auch als sog. Schläger bezeichnet werden. Dabei werden die Graphitflocken GF gefaltet und um einen Kern der jeweiligen Graphitflocke GF herumgewickelt.

Durch diesen Vorgang wird bei einer Batterieverwendung der verrundeten Graphitteilchen SG eine geringere irreversible Kapazität und zudem eine hohe Lebensdauer erreicht. Die glatte Oberfläche der verrundeten Graphitteilchen SG verhindert ein Abblättern oder Aufschiefern. Das Pulver mit den verrundeten Graphitteilchen SG weist eine erhöhte Stampfdichte und somit in Batterieanwendungen eine hohe Energiedichte auf.

Das Pulver eignet sich besonders für die Herstellung von Lithiumionen-Batterien, da die Lithiumionen einen vereinfachten Zugang zum Graphit durch die zwischen den verrundeten Graphitteilchen SG ausgebildeten Hohlräumen haben, insbesondere lagern sich die Lithiumionen in den Ebenen zwischen den gefalteten Graphitflocken an. Das Pulver mit den verrundeten Graphitteilchen wird nach dem Verrunden und vor der Verwendung zur Batterieherstellung etc. nochmals chemisch gereinigt und dann beschichtet.

Vorzugsweise weist die Vorrichtung 1, wie in der Fig. 1 zu sehen ist, in ihrem Prozessraum eine Mehrzahl von an einem Rotor bzw., besser, an einer rotatorisch beweglichen Scheibe 7 angeordnete Verrundungswerkzeuge 5 auf. Das über die Aufgabeeinrichtung 3 in den Innenraum der Vorrichtung eingebrachte Graphitmaterial GM wird von den Verrundungswerkzeugen 5 erfasst, beschleunigt und gegen eine Prallfläche 6 geführt, die sich hier meist durch Prallschrägen auszeichnet, die eine Neigung gegenüber der Innenmantelfläche des Gehäuses haben.

Die Prallfläche 6 stellt insbesondere einen Bereich der zylindrisch ausgebildeten Innenmantelfläche 21 des Gehäuses 2 dar.

Die Verrundungswerkzeuge 5 sind ausweislich der Fig. 1 und in der Fig. 1A insbesondere allumfänglich und in regelmäßigen Abständen zueinander an einem Außenumfang einer sich drehend beweglichen Scheibe 7 angeordnet, die über eine erste Antriebswelle 8 an einem nicht figürlich dargestellten Antrieb angeordnet ist. Die Prallfläche 6 und die Verrundungswerkzeuge 5 sind derart ausgeführt, dass das Graphitmaterial GM in unterschiedlichen Winkeln auf die Verrundungswerkzeuge 5 auftrifft, wodurch eine besonders vorteilhafte Verformung, insbesondere Faltung, der Graphitflocken GF erzielt werden kann. Die Verrundungswerkzeuge 5 sind insbesondere für eine möglichst hohe Anzahl von Partikelstößen in unterschiedlichen Aufprallwinkeln optimiert.

Die Verarbeitung von Graphitmaterial GM zu sphäroidisiertem Graphit SG erfolgt "batchwise", also chargenweise. Die Bearbeitungszeit pro Charge hängt nicht nur, aber maßgeblich von der Leistung ab, die die Verrundungswerkzeuge 5 in das zu verarbeitende Graphitmaterial eintragen können. Je höher der Leistungseintrag und damit der Energieeintrag pro Zeiteinheit ist, desto stärker erwärmt sich der Inhalt der Prozesskammer und damit auch die Prozesskammer und ihre Einbauten. Das führt zu den eingangs genannten Problemen.

Um insoweit Abhilfe zu schaffen, ist dieses Ausführungsbeispiel mit mindestens einem zusätzlichen Anschluss bzw. Port 5a zur Aufgabe von Kühlmittel in das Innere des Prozessraums versehen, vorzugsweise an seinem oberseitigen Deckel. Idealerweise ist auch noch ein zweiter Anschluss bzw. Port 5b vorgesehen. Dieser hält einen Aufnehmer für die Prozessraumtemperatur. Die eben genannten Ports sind in Fig. 1B gut zu erkennen.

Durch diesen Port 5a wird ein Kühlmittel als freies Kühlmittel in den Prozessraum eingebracht. Es kann sich im Prozessraum mit dem zu verrundenden Graphitmaterial GM vermischen und daher besonders intensiv und schnell zumindest einen Teil der durch die Verrundungswerkzeuge 5 in das zu verrundende Graphitmaterial GM eingebrachten Energie aufnehmen bzw. absorbieren (z. B. durch Kühlmittelverdampfung).

Für die von den Fig. 1 und 1A gezeigte Vorrichtung 1 ergibt sich im Laufe einer Batchverarbeitung ohne Kühlung eine Temperaturerhöhung von etwa 130 °C.

Verwendet man hingegen eine erfindungsgemäße Wassernebelkühlung und saugt zu diesem Zweck Luft mit 15 °C aus der Umgebung an, die eine relative Feuchte von 65 % und einen Wassergehalt im Ausgangszustand von etwa 8,9 g/m³ hat, dann ist eine Wassermenge von 42 kg/h ausreichend, um damit eine stabile Prozesstemperatur zwischen 60 °C und 70 °C zu gewährleisten, denn der mittlere Leistungseintrag über den gesamten Batch beträgt rund 50 kW.

Entsprechend müssen etwa 60 % der eingebrachten Leistung gekühlt werden, um einen stabilen Betriebspunkt im Zielbereich einzustellen. Dementsprechend wird die Kühlmittelaufgabe bei den erfindungsgemäßen Vorrichtungen so gestaltet, dass 1 kg Wasser/1 kg Aufgabeprodukt in den Prozessraum eingebracht werden. Etwas weiter gefasst lässt sich definieren, dass Auslegungen anzustreben sind, bei denen zwischen 0,5 kg und 1,5 kg Wasser/kg Aufgabeprodukt auf den Prozessraum aufgegeben werden.

Stellgröße ist meist, so auch bei diesem Ausführungsbeispiel, die Temperatur im Prozessraum. Erreicht diese einen Wert von zum Beispiel 60 °C, wird zunächst das Treibmedium der hier und generell bevorzugt verwendeten Zweistoffdüse eingeschaltet. Bei diesem Ausführungsbeispiel ist das die trockene Druckluft. Idealerweise mit Zeitverzögerung, überwiegend zwischen 5 Sekunden und 30 Sekunden, wird dann das Ventil für die Menge des hier verwendeten Wassers geregelt. Diese Menge der Eindüsung definiert die Kühlleistung.

Die Fig. 1B zeigt eine besonders günstige Einbausituation für den Port 5a. Denn die Kühlmittelaufgabe ist um ca. 90° versetzt in Drehrichtung vom Produktauslass 17 platziert, von dem in Fig. 1B der Absaugstutzen zu sehen ist. Die Temperaturmessung ist idealerweise genau gegenüber der Kühlmittelaufgabe positioniert.

Die Kühlmittelaufgabe sollte nicht zu nah an dem besagten Absaugstutzen platziert werden, um sicherzustellen, dass kein feuchtes Produkt abgesaugt wird.

In der von Fig. 1B dargestellten Situation muss das durch die Kühlmittelaufgabe befeuchtete Material noch 270° um die Anlage wandern, bis zu dem besagten Absaugstutzen. Um wirklich sicherzustellen, dass das Produkt trocken aus der Anlage kommt, sollte die Kühlmittelaufgabe bei der Absaugung ausgestellt werden.

Anhand der Fig. 1C ist zu sehen, dass die radiale Position zumindest des Ports 5a zur Kühlmittelaufgabe idealerweise radial außen vom Leitring 41 ist. Hier ist die Temperatur des Graphitmaterials im Regelfall am höchsten und es gibt nur wenig Beeinflussung durch die kalte Spaltluft.

Die Vorrichtung 1 umfasst weiterhin eine Trenneinrichtung 10, beispielsweise einen Windsichter mit Sichterrad 11.

Beim Verrunden der Graphitflocken GF kann ein Abrieb in Form von Feinmaterial und/oder Feinstmaterial FM entstehen. Da das gewünschte Endprodukt EP vorzugsweise nur verrundete Graphitteilchen SG aufweisen soll, wird das Feinmaterial und/oder Feinstmaterial FM direkt innerhalb der Vorrichtung 1 von den verrundeten Graphitteilchen SG abgetrennt und aus der Vorrichtung 1 entfernt. Die Trenneinrichtung 10 ist oberhalb der Scheibe 7 mit den Verrundungswerkzeugen 5 angeordnet.

Das Sichterrad 11 ist über eine nicht genauer gezeigte zweite Antriebswelle mit einem zweiten Antrieb verbunden, der hier ebenfalls nicht figürlich dargestellt ist. Insbesondere kann vorgesehen sein, dass die erste Antriebswelle 8 und die zweite Antriebswelle koaxial angeordnet sind.

Über einen Zufuhrstutzen 14 im unteren Bereich der Vorrichtung 1, insbesondere unterhalb der rotierenden Scheibe 7 mit den Verrundungswerkzeugen 5, wird von unten nach oben gerichtet Prozessluft PL zugeführt, die zum Verrundungsbereich und über die Leitelemente 25 zur Trenneinrichtung 10 hingeleitet wird. Die Prozessluft PL nimmt dabei das Feinmaterial und/oder Feinstmaterial FM mit und führt dieses über die Absaugstutzen 16 aus der Vorrichtung 1 ab.

Innerhalb der Vorrichtung 1 tritt das Graphitmaterial GM mindestens einmal in Wirkkontakt mit mindestens einem Verrundungswerkzeug 5, wodurch das Graphitmaterial GM mit einem Drall behaftet wird. Durch die Leitelemente 25 werden die mit Drall behafteten Graphitflocken GF, die mit Drall behafteten verrundeten Graphitteilchen SG und das mit Drall behaftete Feinmaterial und/oder Feinstmaterial FM in eine senkrechte Richtung umgeleitet, insbesondere senkrecht zur rotierenden Scheibe 7, und erreichen die Trenneinrichtung 10 somit zumindest weitgehend ohne Drall. Dies bewirkt eine optimale Anströmung der Trenneinrichtung 10, wodurch sich eine hohe Trennschärfe ergibt.

Gemäß einer Ausführungsform der Erfindung wird das Graphitmaterial GM über die Aufgabeeinrichtung 3 dem Prozessraum 40 der Vorrichtung 1 zugeführt. Das Graphitmaterial GM trifft auf den Leitring auf und dabei wird GM am Sichterrad 11 vorbeigeführt, so dass bereits vorhandener feiner Staub ausgesichtet wird.

Das Graphitmaterial GM trifft dann auf die Scheibe 7 mit den Verrundungswerkzeugen 5 auf, die die Energie für die Verrundung aufbringen.

Insbesondere wird das Graphitmaterial GM von der Scheibe 7 mit den Verrundungswerkzeugen 5 erfasst, beschleunigt und gegen die Prallfläche 6 geschleudert. Während dieser ersten beiden Verfahrensschritte ist der Produktauslass 17 verschlossen.

Die Prozessluft PL gelangt über den Zufuhrstutzen 14 in das Gehäuse 2 der Vorrichtung 1 und durchströmt einen zwischen der Scheibe 7 mit den Verrundungswerkzeugen 5 und der Prallfläche 6 ausgebildeten Spalt 45.

Beim Durchströmen des Spaltes 45 werden die beanspruchten Graphitteilchen von dem Luftvolumenstrom durch den Leitring 41 gezielt dem Sichterrad 11 angeboten. Das Material, welches nunmehr zumindest teilweise verrundete Graphitteilchen umfasst, gelangt in einer internen Strömung zurück zu der Scheibe 7 mit den Verrundungswerkzeugen 5. Der feine Staub, insbesondere Feinmaterial und/oder Feinstmaterial FM, verlässt die Vorrichtung mit der Prozessluft PL über den Absaugstutzen 16.

Die verrundeten Graphitteilchen SG werden über eine Absaugvorrichtung abgezogen, wie sie die Fig. 1B zeigt. Das Absaugen erfolgt direkt am Inneren des Leitrings 41. Dadurch wird sichergestellt, dass kein Graphitmaterial GM aus der Vorrichtung 1 abgezogen wird, welches nicht zuvor am Sichterrad 11 vorbeigeführt wurde.

Das Graphitmaterial GM wird für eine definierte Zeit in der Vorrichtung behandelt, wobei es insbesondere mehrfach in Wirkkontakt mit den rotierenden Verrundungswerkzeugen 5 kommt, wodurch die Graphitflocken GF gefaltet und zu verrundeten Graphitteilchen SG umgeformt werden. Nach einer vordefinierten Zeit kann man davon ausgehen, dass das Graphitmaterial GM weitgehend nur noch aus verrundeten Graphitteilchen SG besteht. Das Endprodukt in Form von verrundeten Graphitteilchen SG kann nunmehr über einen Produktauslass 17 aus der Vorrichtung 1 entnommen und beispielsweise für die Herstellung von Batterien verwendet werden.

Zu weiteren Verbesserung der Beanspruchung des Graphitmaterials GM durch eine verbesserte Strömungsführungkann vorgesehen sein, dass über den Verrundungswerkzeugen 5 jeweils ein Abdeckring 18 angeordnet ist, vgl. Fig. 1 und 1A. Der Abdeckring 18 erstreckt sich vorteilhafterweise über alle am Umfang der rotierenden Scheibe 7 angeordneten Verrundungswerkzeuge 5. Er ermöglicht eine vorteilhafte Zirkulation der zu verrundenden Graphitteilchen, da durch den Abdeckring 18 die Strömungsführung der Graphitteilchen innerhalb der Vorrichtung 1 optimiert ist.

Der Abdeckring erzeugt durch Verengung der offenen Fläche im Bereich der Schläger eine Zone sehr hoher Energiedichte. Die Strömungsgeschwindigkeit der umlaufenden Gasmenge steigt in diesem Bereich durch Verschließen der Kanäle zwischen den Schlägern deutlich an. Das erleichtert den Abtransport der vom Sichter abgewiesenen Partikel durch den aus der höheren Geschwindigkeit resultierenden größeren Druckgradienten über den Durchmesser der Scheibe 7.

Dieser Abdeckring 18 verhindert insbesondere, dass das grobe Graphitmaterial GM, insbesondere die Graphitflocken GF und/oder bereits verrundete Graphitteilchen SG, nach oben geschleudert werden und ohne Kontakt zu den Verrundungswerkzeugen 5 durch den Prozessraum 40 zirkulieren. Der Abdeckring 18 erzwingt insbesondere einen mehrfachen Wirkkontakt zwischen den Verrundungswerkzeugen 5 und dem groben Graphitmaterial GM.

Die Vorrichtung 1 umfasst weiterhin gemäß einer Ausführungsform eine nicht figürlich dargestellte Steuerungseinrichtung, mittels derer beispielsweise der erste Antrieb und/oder der zweite Antrieb und somit die Drehzahl des Sichterrads 11 und/oder die Drehzahl der Scheibe 7 mit den Verrundungswerkzeugen 5 reguliert und/oder steuert.

### SONSTIGES

Die diesen Unterlagen bei deren Einreichung beigefügte deutsche Patentanmeldung mit dem amtlichen Aktenzeichen DE 10 2023 122 651 beschreibt eine Gesamtvorrichtung, mit der in mehreren Schritten besonders effizient verrundetes Graphit unterschiedlicher Klassen hergestellt werden kann.

Die von DE 10 2023 122 651 beschriebene Gesamtvorrichtung und das dort beschriebene Verfahren können besonders effizient betrieben werden, wenn in mindestens einer und vorzugweise allen Stufen, in denen der Einsatz eines Sphärosichters vorgesehen ist, ein Sphärosichter nach der Maßgabe der hiesigen Erfindung zum Einsatz kommt. Dies vorweggeschickt, wird der gesamte Offenbarungsgehalt der beigefügten deutschen Anmeldung DE 10 2023 122 651 per Verweis zum Gegenstand der heutigen Anmeldung gemacht.

In diesem Sinne kann im Rahmen der hiesigen Anmeldung zu gegebener Zeit nicht nur, aber auch unabhängiger Schutz für eine Gesamtvorrichtung zur Herstellung von sphäroidisiertem Graphit beansprucht werden, die aus einer Sichtermühle und mehreren nach Maßgabe der DE 10 2023 122 651 hintereinandergeschalteten und sich dadurch speisenden Vorrichtungen nach einem der unten in dieser Anmeldung stehenden Ansprüche besteht.

Darüber hinaus kann zu gegebener Zeit ein Verfahren zur Herstellung von sphäroidisiertem Graphit mit den folgenden Schritten beansprucht werden: Befüllung des Prozessraums eines nach Maßgabe dieser heutigen Anmeldung gebauten Sphärosichters bevorzugt nach einem der vorhergehenden Ansprüche 1 bis 12 mit einem Batch aus bevorzugt vorgemahlenem Graphit, Einbringung von rotatorischer Energie in den Prozessraum des Sphärosichters, Temperierung des Prozessraums durch Einbringen eines freien Kühlmittels in den Prozessraum. Die Temperierung erfolgt bevorzugt auf eine Prozesstemperatur zwischen 40 °C und 120 °C, idealerweise auf eine Prozesstemperatur zwischen 40 °C und 100 °C.

Darüber hinaus kann zu gegebener Zeit auch Schutz beansprucht werden für ein Verfahren zur Herstellung von durch Prallwirkung verrundeten Graphitpartikeln bestimmter, unterschiedlicher Feinheitsklassen, mit Hilfe mehrerer hintereinandergeschalteter Sphärosichter nach Maßgabe dieser heutigen Patentanmeldung, das sich dadurch auszeichnet, dass das zu verrundende Graphitmaterial vorzerkleinert wird, und dann ein erster Sphärosichter hieraus durch Faltung sphäroidisiertes Graphitmaterial einer ersten Feinheitsklasse herstellt, das als Endprodukt aus dem Verfahren ausgeschleust wird, und gleichzeitig Graphitmaterial ausscheidet, das überwiegend nicht zu Graphitmaterial dieser ersten Feinheitsklasse verarbeitet werden kann, weil es zu weit zerkleinert ist, wobei das ausgeschiedene, zu weit zerkleinerte Graphitmaterial einem zweiten Sphärosichter zugeführt wird, der hieraus durch Faltung sphäroidisiertes Graphitmaterial einer zweiten, feineren Feinheitsklasse herstellen kann, das ebenfalls als Endprodukt aus dem Verfahren ausgeschleust wird.

Darüber hinaus kann zu gegebener Zeit auch Schutz für ein Verfahren zur Herstellung von durch Prallwirkung verrundeten Graphitpartikeln bestimmter, unterschiedlicher Feinheitsklassen beansprucht werden, das sich dadurch auszeichnet, dass die Intensität, mit der vorgemahlen oder vorzerkleinert wird, so eingestellt wird, dass mehr als 50 Gew.-% des auf den ersten nach Maßgabe dieser Anmeldung ausgeführten Sphärosichter aufgegebenen Graphitmaterials über dessen Sichterrad ausgeschieden werden und dann auf den zweiten, bevorzugt ebenfalls nach Maßgabe der hiesigen Erfindung ausgeführten Sichter aufgegeben werden können, der Graphitmaterial einer feineren Feinheitsklasse herstellt.

### BEZUGSZEICHENLISTE

- 1: Vorrichtung bzw. Sphärosichter
- 2: Gehäuse
- 3: Aufgabeeinreichtung
- 4: Nicht vergeben
- 5: Verrundungswerkzeuge
- 5a: Anschluss bzw. Port für die Aufgabe von freiem Kühlmittel in den Prozessraum
- 5b: Prozessraum, Anschluss bzw. Port für die Erfassung der Prozessraum-Temperatur
- 6: Prallfläche
- 7: Scheibe
- 8: Erste Antriebswelle
- 9: Nicht vergeben
- 10: Trenneinrichtung
- 11: Sichterrad
- 12: Nicht vergeben
- 13: Nicht vergeben
- 14: Zufuhrstutzen
- 15: Nicht vergeben
- 16: Absaugstutzen
- 17: Produktauslass
- 18: Abdeckring
- 19: Nicht vergeben
- 20: Nicht vergeben
- 21: Innenmantelfläche
- 22 bis: 24: nicht vergeben
- 25: Leitelemente
- 26 bis: 39: nicht vergeben
- 40: Prozessraum
- 41: Leitring
- 42 bis 44:: nicht vergeben
- 45: Spalt
- GF: Graphitflocken
- GM: Graphitmaterial
- SG: verrundete Graphitteilchen
- FM: Fein- bzw. Feinstmaterial
- EP: Endprodukt
- PL: Prozessluft
- D: Drehachse
- DR: Drehrichtung

## Patentansprüche

1. Vorrichtung (1) bzw. Sphärosichter zum Verrunden eines Graphitmaterials (GM) durch Prallwirkung umfassend einen Prozessraum (40), eine Aufgabeeinrichtung (3) zur Zuführung von Graphitmaterial (GM) in den Prozessraum (40),
und eine Mehrzahl an Verrundungswerkzeugen (5), die - bevorzugt - am äußeren Umfang eines um eine Drehachse (D) und in einer Drehrichtung (DR) rotierenden Rotors bevorzugt in Gestalt einer Scheibe (7) angeordnet sind, der sich im Prozessraum (40) befindet, wobei die Verrundungswerkzeuge (5) derart gestaltet sind, dass sie im Betrieb so auf Graphitpartikel einwirken können, dass diese durch Faltung verrundet werden,
und eine Trenneinrichtung (10) zum Abtrennen von Feinmaterial und Feinstmaterial (FM)
sowie einen Produktauslass (17),
**dadurch kennzeichnet, dass**
der Prozessraum (40) mit einer Kühlmittelaufgabevorrichtung ausgerüstet ist, über die freies Kühlmedium in den Prozessraum (40) eingebracht werden kann, wobei die Vorrichtung (1) bevorzugt auch eine Regelung für die Prozessraumtemperatur umfasst.

2. Vorrichtung (1) nach Anspruch 1, **dadurch gekennzeichnet, dass** die Kühlmittelaufgabevorrichtung mindestens einen Kühlmittelzerstäuber oder mindestens einen Kühlmittelverdampfer umfasst (der das Kühlmittel verdampft und/oder zerstäubt, bevor und/oder während es in den Prozessraum (40) gelangt und bevor es die Graphitpartikel benetzt bzw. anfeuchtet).

3. Vorrichtung (1) nach einem der vorhergehenden Ansprüche, **dadurch gekennzeichnet, dass** die Kühlmittelaufgabevorrichtung mindestens eine, bevorzugt mehrere, Zweistoffdüsen umfasst.

4. Vorrichtung (1) nach einem der vorhergehenden Ansprüche, **dadurch gekennzeichnet, dass** die Kühlmittelaufgabevorrichtung mit Wasser gespeist wird und bevorzugt auch mit Luft, idealerweise mit entfeuchteter Luft.

5. Vorrichtung (1) nach einem der vorhergehenden Ansprüche, **dadurch gekennzeichnet, dass** die Kühlmittelaufgabevorrichtung einen Flüssigkeits- und bevorzugt einen Wassernebel erzeugt, den sie als freies Kühlmedium in den Prozessraum (40) einbringt.

6. Vorrichtung (1) nach einem der vorhergehenden Ansprüche, **dadurch gekennzeichnet, dass** der Prozessraum (40) durch einen Deckel und bevorzugt durch einen oberseitigen Deckel verschlossen wird, und die Kühlmittelaufgabevorrichtung den Deckel durchdringt.

7. Vorrichtung (1) nach Anspruch 6, **dadurch gekennzeichnet, dass** die Kühlmittelaufgabevorrichtung über die sie tragende Umgebung hinaus frei in den Prozessraum (40) hineinragt, bevorzugt aber um weniger als 7,5 mm, besser um weniger als 5 mm.

8. Vorrichtung (1) nach einem der vorhergehenden Ansprüche, **dadurch gekennzeichnet, dass** der Kühlmittelaufgabevorrichtung ein - bevorzugt geregelter - Kühlmitteltemperierer zugeordnet ist, der das Kühlmittel vor seiner Einbringung in den Prozessraum (40) so temperiert, dass es im Prozessraum (40) seinen Taupunkt nicht unterschreitet.

9. Vorrichtung (1) nach einem der vorhergehenden Ansprüche,
**dadurch gekennzeichnet, dass** das Kühlmittel mit einem Überdruck von mindestens einem bar in den Prozessraum (40) eingebracht wird.

10. Vorrichtung (1) nach einem der vorhergehenden Ansprüche,
**dadurch gekennzeichnet, dass** das Kühlmittel den Prozessraum (40) über die Trenneinrichtung (10) und/oder über den Produktauslass (17) verlässt.

11. Vorrichtung (1) nach einem der vorhergehenden Ansprüche,
**dadurch gekennzeichnet, dass** die Vorrichtung (1) mindestens einen Aufnehmer für die Prozessraumtemperatur besitzt und dieser Aufnehmer bevorzugt entweder mindestes einen halben Prozessraumnenndurchmesser von der mindestens einen Kühlmittelaufgabevorrichtung angeordnet ist, besonders bevorzugt im Deckel und idealerweise auf im Wesentlichen dem gleichen Radius wie die Kühlmittelaufgabevorrichtung und dann bevorzugt um 90° bis 270° winkelverschoben zur Kühlmittelaufgabevorrichtung.

12. Gesamtvorrichtung zur Herstellung von sphäroidisiertem Graphit, bestehend aus einer Sichtermühle und mehreren hintereinandergeschalteten und sich dadurch speisenden Sphärosichtern (1) nach einem der vorhergehenden Ansprüche.

13. Verfahren zur Herstellung von sphäroidisiertem Graphit mit den folgenden Schritten:
Befüllung des Prozessraums (40) eines Sphärosichters (1) bevorzugt nach einem der vorhergehenden Ansprüche 1 bis 12 mit einem Batch aus bevorzugt vorgemahlenem Graphit,
Einbringung von rotatorischer Energie in den Prozessraum (40) des Sphärosichters (1),
Temperierung des Prozessraums (40) durch Einbringen eines freien Kühlmittels in den Prozessraum (40) bevorzugt auf eine Prozesstemperatur zwischen 40 °C und 120 °C, idealerweise auf eine Prozesstemperatur zwischen 40 °C und 100 °C.

14. Verfahren zur Herstellung von durch Prallwirkung verrundeten Graphitpartikeln (SG) bestimmter, unterschiedlicher Feinheitsklassen,
mit Hilfe mehrerer hintereinandergeschalteter Sphärosichter (1) nach einem der Ansprüche 1 bis 12, **dadurch gekennzeichnet, dass** das zu verrundende Graphitmaterial (GM) vorzerkleinert wird, und dann ein erster Sphärosichter (1) hieraus durch Faltung sphäroidisiertes Graphitmaterial (GM) einer ersten Feinheitsklasse herstellt, das als Endprodukt aus dem Verfahren ausgeschleust wird,
und gleichzeitig Graphitmaterial (GM) ausscheidet, das überwiegend nicht zu Graphitmaterial (GM) dieser ersten Feinheitsklasse verarbeitet werden kann, weil es zu weit zerkleinert ist,
wobei das ausgeschiedene, zu weit zerkleinerte Graphitmaterial (GM) einem zweiten Sphärosichter (1) zugeführt wird, der hieraus durch Faltung sphäroidisiertes Graphitmaterial (GM) einer zweiten, feineren Feinheitsklasse herstellen kann, das ebenfalls als Endprodukt aus dem Verfahren ausgeschleust wird.

15. Verfahren zur Herstellung von durch Prallwirkung verrundeten Graphitpartikeln (SG) bestimmter, unterschiedlicher Feinheitsklassen nach Anspruch 14, **dadurch gekennzeichnet, dass** die Intensität, mit der vorgemahlen oder vorzerkleinert wird, so eingestellt wird, dass mehr als 50 Gew.-% des auf den ersten Sphärosichter (1) aufgegebenen Graphitmaterials (GM) über dessen Sichterrad (11) ausgeschieden werden und dann auf den zweiten Spärosichter (1) aufgegeben werden können, der Graphitmaterial (GM) einer feineren Feinheitsklasse herstellt.

16. Verfahren zur Herstellung von durch Prallwirkung verrundeten Graphitpartikeln (SG) bestimmter, unterschiedlicher Feinheitsklassen nach Anspruch 14 oder 15, **dadurch gekennzeichnet, dass** zwei Sphärosichter (1) hintereinandergeschaltet sind, von denen jeder ein Endprodukt herstellt.

17. Verfahren zur Herstellung von durch Prallwirkung verrundeten Graphitpartikeln (SG) bestimmter, unterschiedlicher Feinheitsklassen nach einem der vorhergehenden Ansprüche 14 bis 16, **dadurch gekennzeichnet, dass** das Feingut (FM), das vom ersten Sphärosichter (1) ausgeschieden wird, auf den zweiten Sphärosichter (1) aufgegeben wird, ohne es außerhalb des ersten Sphärosichters (1) nochmals zu sichten und/oder zu filtern.
